**Europäisches Patentamt**

**European Patent Office**

**Office européen des brevets**

(11) Veröffentlichungsnummer: **0 061 504**
**B1**

(19)

# (12) EUROPÄISCHE PATENTSCHRIFT

(45) Veröffentlichungstag der Patentschrift:
**16.01.85**

(51) Int. Cl.⁴: **B 21 D 43/10,** B 21 D 45/04,
F 16 H 21/04

(21) Anmeldenummer: **81102271.4**

(22) Anmeldetag: **26.03.81**

(54) **Bewegungsgetriebe für ein Transportorgan.**

(43) Veröffentlichungstag der Anmeldung:
**06.10.82 Patentblatt 82/40**

(45) Bekanntmachung des Hinweises auf die Patenterteilung:
**16.01.85 Patentblatt 85/3**

(84) Benannte Vertragsstaaten:
**DE FR GB IT**

(56) Entgegenhaltungen:
**DD - A - 94 974**
**DD - A - 108 045**
**DD - A - 120 370**
**DE - A - 1 652 959**
**DE - A - 2 462 130**
**DE - B - 1 069 974**

(73) Patentinhaber: **L. SCHULER GmbH,**
**Bahnhofstrasse 41 - 67 Postfach 1222,**
**D-7320 Göppingen (DE)**

(72) Erfinder: **Maier, Karl, Gänsstelle 1, D-7343 Kuchen (DE)**
Erfinder: **Höhn, Herbert, Raiffeisenstrasse 38,**
**D-7320 Göppingen (DE)**
Erfinder: **Tappen, Gerhard, Joh. Seb. Bach-Strasse 12,**
**D-7321 Wangen (DE)**

## Beschreibung

Die Erfindung bezieht sich auf ein Bewegungsgetriebe, durch welches einem Transportorgan eine hin- und hergehende, im wesentlichen geradlinige, waagerechte, verhältnismässig lange erste Teilbewegung und an deren beiden Enden daran anschliessend eine im wesentlichen geradlinige, lotrechte, verhältnismässig kurze zweite Teilbewegung sowie kurvenförmige Übergänge zwischen beiden Teilbewegungen erteilbar sind, mit einem Lenkerparallelogramm, dessen obere Basis höhenlagenveränderlich geführt ist, dessen untere Basis das Transportorgan trägt und an dessen einem Lenkerhebel zwischen den Anlenkungen an den beiden Basen eine angetriebene Schwenkkurbel angreift.

Derartige Bewegungsgetriebe finden zum Bewegen von Transportorganen Anwendung, die dazu dienen, Werkstücke in Bearbeitungsmaschinen, insbesondere Stanz- und Verformungspressen, einzulegen oder aus Bearbeitungsmaschinen zu entnehmen oder von einer Bearbeitungsmaschine in eine folgende Bearbeitungsmaschine zu überführen. Die Notwendigkeit für die an den beiden Enden der ersten Teilbewegung anschliessende, im wesentlichen geradlinige, lotrechte, verhältnismässig kurze zweite Teilbewegung ergibt sich dabei aus dem Erfordernis, das Werkstück auch in ein geformtes Werkzeug mit lotrechter Erstreckung einlegen oder aus einem solchen Werkzeug entnehmen zu können. Als Transportorgane kommen bei derart angewandten Bewegungsgetrieben vorzugsweise Sauger und zangenartige Greifer in Betracht.

Bei einem bekannten Bewegungsgetriebe der eingangsgenannten Art (DE-OS Nr. 1402803) ist eine einfache Schwenkkurbel mit unveränderlicher Kurbellänge vorgesehen, so dass sich eine durch die Kinematik des Bewegungsgetriebes bestimmte, unveränderliche Form der Bewegung des Transportorganes ergibt, bei der nur Veränderungen der Länge der zweiten Teilbewegung durch Veränderungen des Schwenkwinkels der Schwenkkurbel möglich sind.

Bei einem anderen bekannten Bewegungsgetriebe (DE-AS Nr. 2439722), das zur Anwendung für den gleichen Zweck vorgesehen ist, bei dem jedoch der eine Lenkerhebel über die obere Basis hinaus verlängert ist und die Schwenkkurbel in Höhe der oberen Basis an dem verlängerten Lenkerhebel angreift, ist an dem oberen Ende der Verlängerung des verlängerten Lenkerhebels ein Führungsorgan, z.B. eine Führungsrolle, vorgesehen, die in einer Führungsbahn geführt ist. Diese Führungsbahn besteht aus einem lotrechten, geradlinigen Abschnitt, der der im wesentlichen geradlinigen, waagerechten, verhältnismässig langen ersten Teilbewegung zugeordnet ist, und zwei an dem unteren Ende des lotrechten Abschnittes anschliessenden, sich nach beiden Seiten erstreckenden, kreisbogenförmigen Abschnitten, die den im wesentlichen geradlinigen, lotrechten, verhältnismässig kurzen zweiten Teilbewegungen zugeordnet sind. Der Übergang zwischen dem lotrechten Abschnitt und den kreisbogenförmigen Abschnitten wird dabei durch zwei an einem Schwenkhebel angebrachte, wahlweise zur Wirkung bringbare Steuerkurven gebildet, die den kurvenförmigen Übergängen zwischen den beiden Teilbewegungen zugeordnet sind. Auch hierbei ist die Form der Bewegung des Transportorganes durch die Kinematik des Bewegungsgetriebes festgelegt.

Bei einem weiteren bekannten Bewegungsgetriebe (DE-OS Nr. 2847543), das zur Anwendung für den gleichen Zweck vorgesehen ist, bei dem ebenfalls der eine Lenkerhebel über die obere Basis hinaus verlängert ist und die Schwenkkurbel in Höhe der oberen Basis angreift, ist der obere Endabschnitt der Verlängerung des verlängerten Lenkerhebels verschieblich in einer schwenkbaren Führung gehalten, die ihrerseits auf einem lotrecht verschiebbaren Schlitten sitzt, der durch eine drehbare Steuerscheibe gesteuert aufwärts und abwärts bewegbar ist. Hierbei lässt sich zwar die Form der Bewegung des Transportorganes durch die Formgebung der Steuerscheibe beeinflussen und durch deren Austausch auch verändern, doch ist dieses Bewegungsgetriebe vielteilig und durch die Notwendigkeit, die Steuerscheibe zu drehen, nicht besonders zweckmässig.

Ein weiteres bekanntes Bewegungsgetriebe (US-PS Nr. 2811266), das zur Anwendung für den gleichen Zweck vorgesehen ist, hat ebenfalls die Nachteile der Vielteiligkeit und der nur beschränkten Möglichkeiten einer Beeinflussung oder Veränderung der Form der Bewegungsbahn.

Der Erfindung liegt die Aufgabe zugrunde, die Nachteile der bekannten Bewegungsgetriebe durch einen einfacheren Aufbau und eine zweckmässigere Möglichkeit für die Beeinflussung und Veränderung der Form der Bewegung des Transportorganes zu vermeiden.

Diese Aufgabe ist bei einem Bewegungsgetriebe der eingangs genannten Art dadurch gelöst, dass die Schwenkkurbel dadurch eine sich über den Schwenkwinkel verändernde Kurbellänge aufweist, dass mindestens eine mit der Schwenkkurbel mitschwenkende, radial verschiebliche Kurvenrolle vorgesehen ist, die mit dem Angriffspunkt der Schwenkkurbel an dem einen Lenkerhebel verbunden ist, und die auf einer achsgleich zur Schwenkachse befestigten Kurvenscheibe abrollt, die einen Kurvenabschnitt von gleichbleibendem Radius für die erste Teilbewegung und beiderseits anschliessende Kurvenabschnitte für die Übergänge und die zweite Teilbewegung aufweist.

Die radiale Verschieblichkeit einer Kurvenrolle und deren Verbindung mit dem Angriffspunkt an dem einen Lenkerhebel kann insbesondere dadurch verwirklicht sein, dass entweder die Kurvenrolle in einem radialen Schlitz in der Schwenkkurbel verschieblich geführt und auf dem einen Lenkerhebel selbst drehbar gelagert ist, oder die Schwenkkurbel auf ihrer Schwenkachse radial verschieblich geführt, mit einer Lagerung für die Kurvenrolle versehen und an dem Angriffspunkt an dem einen Lenkerhebel angelenkt ist.

Hierbei ergibt die feststehende Kurvenscheibe einen einfachen Aufbau mit nur verhältnismässig wenigen bewegten Teilen und eine relativ einfache Austauschbarkeit der Kurvenscheibe zwecks Veränderung der Form der Bewegung des Transportorganes. Selbstverständlich ist bei der Auslegung des Bewegungsgetriebes nach der Erfindung vorausgesetzt, dass die waagerechte erste Teilbewegung nur so lang sein soll, wie zum Einlegen, Entnehmen oder Überführen der Werkstücke bei dem jeweiligen Anwendungsfall erforderlich ist.

Vorteilhafterweise kann die Kurvenscheibe aus zwei unter sich gleichen, je 180° Zentriwinkel umfassenden Teilen bestehen, und die gegenüber der Schwenkachse radial verschiebliche, um einen Schwenkwinkel von höchstens 180° schwenkende Schwenkkurbel zwei Kurvenrollen tragen, von denen jede an einem Teil der Kurvenscheibe anliegt, so dass bei genügend genau gefertigter Kurvenscheibe die Kurvenrollen ohne Druck an der Kurvenscheibe anliegen können. Dadurch wird die bei Veränderungen der Kurbellänge der Schwenkkurbel auftretende Reibung verringert.

Weiter ist es vorteilhaft, die höhenlagenveränderliche Führung der oberen Basis als lotrechte Geradführung auszubilden, wodurch sich besonders einfache und übersichtliche kinematische Verhältnisse für das Bewegungsgetriebe ergeben.

In der Zeichnung ist ein Ausführungsbeispiel eines Bewegungsgetriebes nach der Erfindung mit davon bewegten Transportorganen schematisch dargestellt, und zwar zeigt:

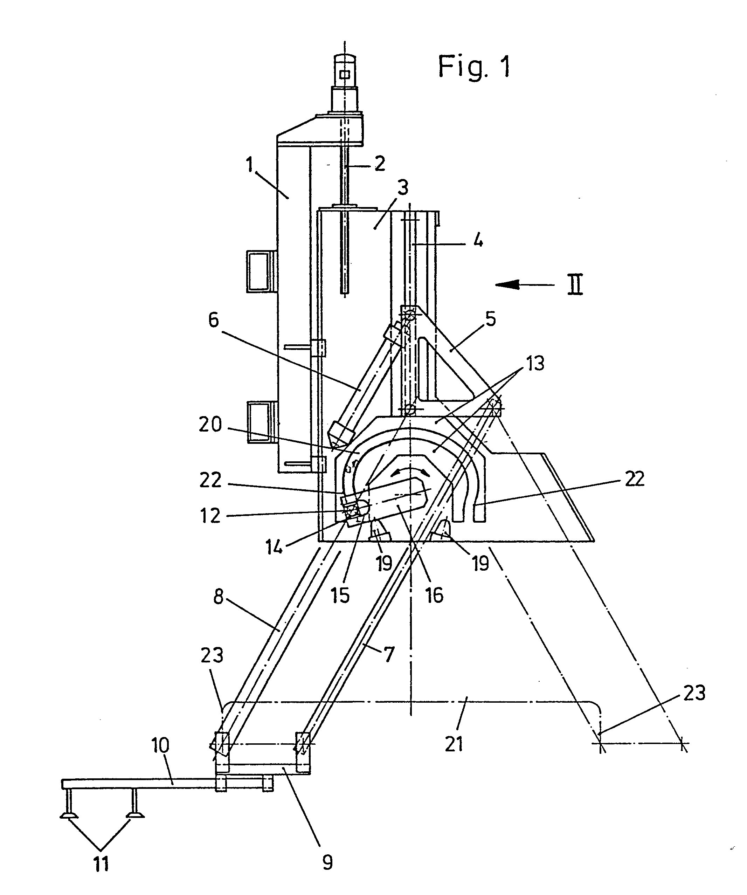

Fig. 1 eine Seitenansicht,

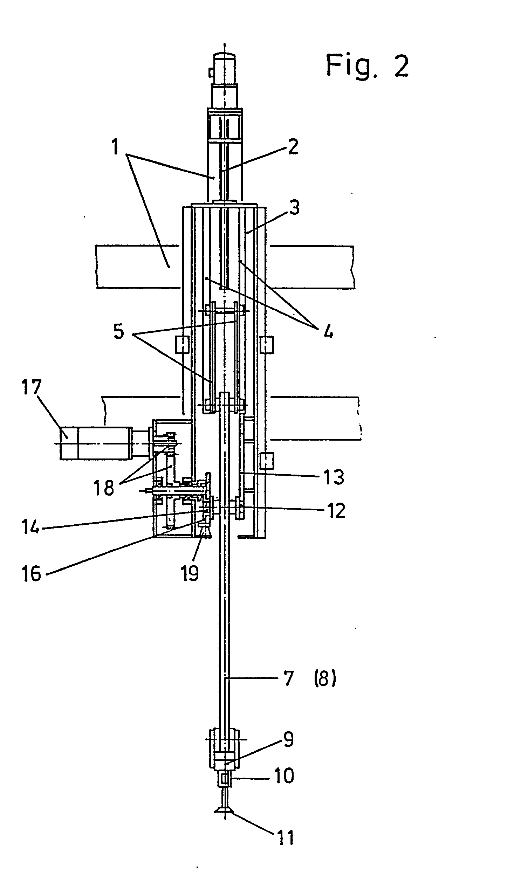

Fig. 2 eine Stirnansicht in Richtung des Pfeiles II in Fig. 1.

An einem ortsfesten Gestell 1, das an einer – in der Zeichnung nicht dargestellten – Presse befestigt sein kann, ist mittels einer Spindel 2 höhenverstellbar ein Rahmen 3 angeordnet, der das Bewegungsgetriebe trägt. In dem Rahmen 3 sind zwei lotrechte Geradführungen 4 vorgesehen, in denen die als Dreieckträger ausgebildete obere Basis 5 eines Lenkerparallelogrammes höhenlagenveränderlich geführt ist. An der oberen Basis 5 ist eine anderenends an dem Rahmen 3 angelenkte Zylinder-Kolben-Einheit 6 angelenkt, die mit Druckmittel beaufschlagt ist und deren in Richtung der Geradführungen 4 nach oben gerichtete Kraftkomponente dem Gewicht des Lenkerparallelogrammes etwa das Gleichgewicht hält.

An der oberen Basis 5 sind die oberen Enden zweier paralleler Lenkerhebel 7, 8 angelenkt, deren untere Enden in einer unteren Basis 9 des Lenkerparallelogrammes angelenkt sind. An der unteren Basis 9 ist ein horizontaler Träger 10 befestigt, der zwei Sauger 11 als Transportorgane für ein – in der Zeichnung nicht dargestelltes – Werkstück trägt.

Auf dem einen Lenkerhebel 8 sind gleichachsig eine Kurvenrolle 12, die in eine Kurvenscheibe 13 eingreift, und ein Gleitstein 14 drehbar gelagert, der in einem radialen Schlitz 15 in einer um eine horizontale Schwenkachse schwenkbaren Schwenkkurbel 16 verschieblich geführt ist, wodurch sich eine Veränderbarkeit der wirksamen Kurbellänge der Schwenkkurbel 16 ergibt. Ein Schwenkantrieb 17 erzeugt über ein Zahnradpaar 18 die Schwenkbewegungen der Schwenkkurbel 16, deren Schwenkwinkel durch Anschläge 19 begrenzt ist.

Die Kurvenscheibe 13 ist in dem Rahmen 3 achsgleich zur Schwenkachse der Schwenkkurbel 16 befestigt und weist einen Kurvenabschnitt 20 von gleichbleibendem Radius für die im wesentlichen geradlinige, waagerechte, verhältnismässig lange erste Teilbewegung 21 der Transportorgane und beiderseits anschliessende Kurvenabschnitte 22 mit sich änderndem Radius für die im wesentlichen geradlinigen, lotrechten, verhältnismässig kurzen zweiten Teilbewegungen 23 der Transportorgane und die kurvenförmigen Übergänge auf. Veränderungen des Schwenkwinkels der Schwenkkurbel 16 ergeben Veränderungen der Längen der zweiten Teilbewegungen 23.

**Patentansprüche**

1. Bewegungsgetriebe, durch welches einem Transportorgan (11) eine hin- und hergehende, im wesentlichen geradlinige, waagerechte, verhältnismässig lange erste Teilbewegung (21) und an deren beiden Enden daran anschliessend eine im wesentlichen geradlinige, lotrechte, verhältnismässig kurze zweite Teilbewegung (23) sowie kurvenförmige Übergänge zwischen beiden Teilbewegungen (21, 23) erteilbar sind, mit einem Lenkerparallelogramm (5, 7, 8, 9), dessen obere Basis (5) höhenlagenveränderlich geführt ist, dessen untere Basis (9) das Transportorgan (11) trägt und an dessen einem Lenkerhebel (8) zwischen den Anlenkungen an den beiden Basen (5, 9) eine angetriebene Schwenkkurbel (16) angreift, dadurch gekennzeichnet, dass die Schwenkkurbel (16) dadurch eine sich über den Schwenkwinkel verändernde Kurbellänge aufweist, dass mindestens eine mit der Schwenkkurbel (16) mitschwenkende, radial verschiebliche Kurvenrolle (12) vorgesehen ist, die mit dem Angriffspunkt der Schwenkkurbel (16) an dem einen Lenkerhebel (8) verbunden ist, und die auf einer achsgleich zur Schwenkachse befestigten Kurvenscheibe (13) abrollt, die einen Kurvenabschnitt (20) von gleichbleibendem Radius für die erste Teilbewegung (21) und beiderseits anschliessende Kurvenabschnitte (22) für die Übergänge und die zweite Teilbewegung (23) aufweist.

2. Bewegungsgetriebe nach Anspruch 1, dadurch gekennzeichnet, dass die Kurvenscheibe aus zwei unter sich gleichen, je 180° Zentriwinkel umfassenden Teilen besteht, und dass die gegenüber der Schwenkachse radial verschiebliche, um einen Schwenkwinkel von höchstens 180° schwenkende Schwenkkurbel zwei Kurvenrollen trägt, von denen jede an einem Teil der Kurvenscheibe anliegt.

3. Bewegungsgetriebe nach einem der Ansprüche 1 oder 2, dadurch gekennzeichnet, dass die höhenlagenveränderliche Führung der oberen Basis (5) als lotrechte Geradführung (4) ausgebildet ist.

## Claims

1. Motion linkage, by which a reciprocating, essentially rectilinear, horizontal, relatively long first part movement (21) and subsequently, at both ends of this movement, an essentially rectilinear, vertical, relatively short second part movement (23) and curved transitions between the two part movements (21, 23) can be imparted to a transport member (11), with a guide parallelogram (5, 7, 8, 9), whose upper base (5) is vertically adjustable, whose lower base (9) carries the transport member (11), and on one of whose guide arms (8), between the articulations to the two bases (5, 9), a driven swivelling crank (16) engages, characterised in that the swivelling crank (16) thus has a crank length changing over the swivel angle, that at least one radially movable cam roller (12), swivelling together with the swivelling crank (16), is provided, the cam roller (12) being connected to the point of engagement of the swivelling crank (16) on the one guide arm (8) and rolling on a cam plate (13) mounted on the same axis as the swivel axis, the cam plate (13) having a curved section (20) of constant radius for the first part movement (21) and curved sections (22) adjoining at both sides for the transitions and the second part movement.

2. Motion linkage according to Claim 1, characterised in that the cam plate comprises two parts identical to one another and each enclosing a 180° centre angle, and that the swivelling crank radially movable relative to the swivel axis and swivelling about a swivel angle of a maximum of 180° carries two cam rollers each of which is in contact with one part of the cam plate.

3. Motion linkage according to Claim 1 or 2, characterised in that the vertically adjustable guiding of the upper base (5) is designed as vertical, rectilinear guiding (4).

## Revendications

1. Mécanisme de déplacement au moyen duquel on peut imprimer à un organe de transport (11) un premier déplacement partiel en va-et-vient (21) sensiblement rectiligne, horizontal, relativement long et, faisant suite aux deux extrémités de ce déplacement, un deuxième déplacement partiel (23) sensiblement rectiligne, vertical, relativement court, ainsi que des raccordements courbes entre les deux déplacements partiels (21, 23), mécanisme qui comprend un parallélogramme déformable (5, 7, 8, 9) dont la base supérieure (5) est guidée de manière à pouvoir changer de position en hauteur, dont la base inférieure (9) porte l'organe de transport (11) et dont l'une des biellettes oscillantes (8) est attaquée par une manivelle oscillante entraînée (16) en un point compris entre ses articulations sur les deux bases (5, 9), caractérisé en ce que la manivelle oscillante (16) présente une longueur de manivelle qui varie sur l'angle d'oscillation grâce au fait qu'il est prévu au moins un galet de contre-came (12) mobile en translation radiale, qui oscille avec la manivelle oscillante (16), qui est solidaire du point d'attaque de la manivelle oscillante (16) sur l'une des biellettes oscillantes (8), et qui roule sur une came (13) fixée coaxialement à l'axe d'oscillation, laquelle présente un segment de came (20) de rayon constant pour le premier déplacement partiel (21) et des segments de came (22), qui y font suite des deux côtés, pour les raccordements et le deuxième déplacement partiel (23).

2. Mécanisme de déplacement selon la revendication 1, caractérisé en ce que la came est composée de deux parties, identiques entre elles, qui couvrent chacune un angle au centre de 180°, et en ce que la manivelle oscillante mobile en translation radiale par rapport à l'axe d'oscillation, et qui oscille d'un angle d'oscillation de 180° au maximum, porte deux galets de contre-came dont chacun est appuyé contre une partie de la came.

3. Mécanisme de déplacement selon l'une des revendications 1 ou 2, caractérisé en ce que le guide mobile en hauteur de la base supérieure (5) est constitué par une glissière rectiligne verticale (4).

Fig. 1

Fig. 2